## Europäisches Patentamt
## European Patent Office
## Office européen des brevets

(19)

(11) Publication number: **0 121 318**
**B1**

(12) **EUROPEAN PATENT SPECIFICATION**

(45) Date of publication of patent specification: **11.11.87**

(21) Application number: **84301222.0**

(22) Date of filing: **24.02.84**

(51) Int. Cl.⁴: **G 02 B 5/30,** B 32 B 27/30,
B 32 B 27/32, B 32 B 33/00

(54) A light-polarizing plate having excellent durability and production of the same.

(30) Priority: **01.03.83 JP 34236/83**

(43) Date of publication of application:
**10.10.84 Bulletin 84/41**

(45) Publication of the grant of the patent:
**11.11.87 Bulletin 87/46**

(84) Designated Contracting States:
**DE FR GB IT**

(56) References cited:
**FR-A-2 182 164**

**PATENTS ABSTRACTS OF JAPAN, vol. 7, no. 105 (P-195)1250r, 7th May 1983**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Okumura, Takuzo**
**A2-109, 2-9, Yamadanishi**
**Suita-shi Osaka 565 (JP)**
Inventor: **Yanase, Masataka**
**2-5-142, Oaza-higashino-aza-fukitsuke**
**Kounan-shi Aichi 483 (JP)**
Inventor: **Kikui, Hitoshi**
**2-1, Kuwatacho**
**Ibaraki-shi Osaka 567 (JP)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

## Description

This invention relates to a light-polarizing plate having excellent durability and to its production.

Hitherto, light-polarizing plates have been produced by dyeing a stretch-oriented base film with iodine or dichoroism dye to develop an acceptable polarizing capability, and thereafter providing the resulting light-polarizing film with protector films on both surfaces. The base film has mainly been of polyvinyl alcohol (PVA) or a derivative, and the protector film has mainly been a non-oriented film of cellulose acetate or acrylic resin. The protector film has usually been applied by lamination or coating with a solution containing the protector material. Light-polarizing plates thus produced are used in liquid crystal displays, in removal of reflected-light, or as decorative materials. Light-polarizing plates made of iodine-treated polyvinyl alcohol are commercially available.

The degree of light-polarization and the durability or capability of maintaining an initial polarizability over a long-term, are important requirements for a light-polarizing plate. There is a need to improve the durability of conventional polarizing plates under different use conditions, particularly humid conditions. Various proposals have been made to improve humid durability. For instance, PVA containing a dehydrating catalyst has been heated to create polyene bonds, or PVA film has been dyed on one side in the dyeing process, or PVA has been replaced by another material, such as saponified ethylene-vinyl acetate copolymer (EVA). None of these proposals provides satisfactory results.

We have now found that the moisture content in a polarizing film before lamination with protector films is important. The significance of this factor has probably been overlooked since cellulose acetate or acrylic film used as protector film has a high rate of moisture transmission and the moisture content of a hydrophilic polarizing film would not have been expected to exert any significant effect on the durability of a laminated plate.

According to the present invention there is provided a light-polarizing plate comprising a light-polarizing film covered with a protective film of polymer, wherein said light polarizing film has a moisture content of not more than 5% and said protective film has an average light transmission in the visible region of not less than 30% and a water vapor transmission of not more than 10 g/m$^2$.day.

The light-polarizing film (often abbreviated to "polarizing film" hereinafter) used in accordance with this invention need not be a PVA based film and films capable of absorbing even a little moisture can be used.

The initial moisture content in the polarizing film should be not more than 5%, desirably not more than 2%. The less is the moisture content, the better is the durability, as will be explained hereinafter.

The water vapor transmission of the protective film should be not more than 10 g/m$^2$.day, desirably not more than 5 g/m$^2$.day, when measured according to the method provided in Japanese Industrial Standards (JIS)—Z0208, equivalent to American Society for Testing and Material ASTM—E96 under 40°C—90% Relative Humidity (RH). A protective film having a water vapor transmission value within the limit described above when 100 μm or less thick is preferred since it enables the provision of plates which are thinner and weigh less, and since such films have high light transmission.

Suitable polymers for making the protective film are: fluorocarbon resins, e.g. tetrafluoroethylene-hexafluoropropylene copolymer; polyolefin resins, e.g. high density polyethylene, polypropylene; and polyamide resins, e.g. 12-nylon, 66-nylon. A uniaxially stretched film of such a polymer is preferred for its improved light-transmission and reduced water vapor transmission. The uniaxial stretch of a highpolymer film may be effected by inter-roll stretch with tensile force, or, preferably, by inter-roll stretch under roll pressure. The latter provides a stretched film with excellent light-transmission and is applicable to a broad range of highpolymers and their composites. High density polyethylene and polypropylene are preferred polymers since they are cheap and of low density. However, they should not be used unstretched on account of their low light transmission. Secondary processing, e.g. heat treatment, of rolled films for the purpose of improving the film flatness may be adopted, if desired.

In the event that a protective film is composed of two or more layers, the stretch process as described above may be applied to one or more layers.

When a uniaxially stretched film prepared by rolling is used as the protective film it is preferred to set it so that its direction of stretch-orientation is coincident with that of the polarizing film. This provides a polarizing plate with a high light polarizing co-efficient and higher light transmission.

The stretch process as described above may make possible the use, as protective film, of films of polymers, such as polyester resins and polyvinylchloride resins, which would otherise be unsuitable.

A protective film may be provided on a polarizing film in various ways, for example by laminating a protective film using an adhesive, by tightly adhering a protective film on a polarizing film's surface so that the polarizing film is sealed completely, by coating or by applying a protective layer over a preliminary layer which does not have satisfactory durability.

Two or more protective films may be used and each film may contain, for example, dyes or additives.

Polarizability in this specification is defined by placing two sample sheets of polarizing films or plates one above the other and measuring the light transmission curve of the assembly using a spectrophotometer UV—210 (by Shimadzu Seisakusho).

The polarizability value is given by the formula:

$$\text{Polarizing co-efficient} = \sqrt{\frac{H_{||} - H_{\perp}}{H_{||} + H_{\perp}}} \times 100 \ (\%)$$

wherein $H_{||}$ denotes the parallel transmission which is measured when two sample sheets are piled so that the directions of stretch-orientation thereof are parallel to each other, and $H_{\perp}$ denotes the cross transmission which is measured when two sample sheets are piled so that the directions of stretch-orientation thereof are perpendicular to each other. The data of polarizabilities given in examples, reference examples and comparative examples hereinafter are prepared in such a method that, in the first place, an average value is derived from measurements at every 10 nm interval in the whole range of 400 nm—700 nm, then, where a film was dyed with iodine or where a commercial sample was used, the average value of 400 nm to 700 nm is described, and the best value measured in the whole range is described with indication of wave length where a dye other than iodine was used.

### Reference Example 1

. PVA film (Kurare Vinylon® 7500) 75 μm thick was stretched 4 times uniaxially in the longitudinal direction to provide a polarizing base film. This stretched film was dipped under tension for about 60 seconds at 20°C in a solution composed of 10 g of iodine, 150 g of potassium iodide and 3300 g of water. Then it was again dipped for about 30 seconds at 50°C in a solution composed of 100 g of boric acid and 2000 g of water. Thereafter it was washed thoroughly with alcohol to provide a polarizing film 5 cm square. A three-side sealed sack like a letter envelope was prepared by folding a high density polyethylene (hereinafter, abbreviated HDPE) film 100 μm thick which was uniaxially stretched 7 times in the longitudinal direction by rolling using rolls at 90°C and water as lubricant. The stretched film was 100 μm thick, had a water vapor transmission of 0.6 g/m$^2$.day.100 μm and an average light transmission of 80% in the visible region.

A polarizing film made of iodine-treated PVA having a moisture content of 9% was put into the HDPE sack and the remaining open side was then sealed. Thus obtained was a polarizing plate consisting of the polarizing film wrapped completely by the HDPE sack as protective film where the stretch orientations of both the polarizing film and the protector sack were set in the same direction at sealing. The polarizing plate was stored in a constant temperature-humidity conditioner at 40°C — 90% RH for 96 hrs. Thereafter the decrease in polarizability from the initial value was measured. Data on the initial and post-humidity test are shown in Table 1.

### Reference Example 2

A polarizing film based on iodine-treated PVA was prepared under the same conditions as in Reference Example 1. An HDPE film of 100 μm stretched 7 times in the same way as in Reference Example 1, was laminated on both surfaces of the polarizing film at its moisture content of 9% using an urethane adhesive. The stretch-orientations of the polarizing film and the protective film were set in the same direction.

The polarizing plate thus obtained was stored for 96 hrs at 40°C — 90% RH in a constant temperature-humidity conditioner. Thereafter the decrease in polarizability was measured. Data on the initial and post-humidity test are shown in Table 1.

### Reference Example 3

A commercial polarizing plate was used which was manufactured by Sanritsu Electric Co., Ltd. with the brandname Barilite® LLC$_2$—12—18. It contains moisture of more than 5%. It consists of the PVA based polarizing film laminated on both surfaces thereof with the cellulose acetate film containing a ultraviolet absorber as protector film. In the first place, the initial polarizability thereof was measured. On the other hand, a three side sealed sack like a letter envelope was prepared with HDPE film of 100 μm which had been stretched 7 times under the same with condition as in Reference Example 1. The commercial polarizing plate above was put into the HDPE sack above and the remaining open side thereof was then sealed. Thereby, a polarizing plate was prepared where the polarizing plate consisting of the polarizing film and the triacetate protector was completely wrapped by a sealing envelope made of the roll stretched HDPE protector film. The polarizing plate thus obtained was stored at 40°C — 90% RH in a constant temperature-humidity conditioner for 96 hrs. Thereafter the commercial polarizing plate was put out of the HDPE envelope and the polarizability thereof was measured. Table 1 shows results obtained.

### Reference Example 4

The commercial polarizing plate was used which was manufactured by Nitto Denki Kogyo Co., Ltd. with the brandname NPF—1100H. It contains moisture of more than 5%. It used acrylic resin as protector. The test procedures in the following were conducted after adhesive on the one surface thereof was removed. In the first place, the initial polarizability thereof was measured. On the other hand, a three side sealed sack like a letter envelope was prepared with HDPE film of 100 μm which had been stretched 7 times under the same condition as in Reference Example 1, and the commercial polarizing plate above was put into the HDPE sack above and the remaining open side thereof was then sealed. Thereby, a polarizing plate was made ready where the polarizing plate consisting of the polarizing film and the acrylic resin protector was completely wrapped by the sealing envelope made of roll-stretched HDPE protector film. The polarizing plate thus obtained was stored at 70°C — 90% RH in a constant temperature-humidity conditioner for 60 hrs. Thereafter the commercial polarizing plate was put out of the HDPE envelope and the polarizability thereof was measured. Table 1 shows results obtained.

Reference Example 5

The PVA polarizing base film was prepared under the same condition as in Reference Example 1 and was stretched 4 times. This 4 times stretched PVA film was dipped with being kept under tension in a dichroism dyeing bath at 50°C for 40 min., thereby a yellow colored polarizing film was prepared. The dyeing bath above was composed of 1900 g of water, 0.7 g of anhydorus sodium sulfate and 0.05 g of Chrysophenine, a product by Sumitomo Chemical Co. Ltd. On the other hand, a three side sealed sack like a letter envelope was prepared with HDPE film of 100 μm which had been stretched 7 times under the same condition as in Reference Example 1, and above said colored polarizing film of moisture content 5% was put into the HDPE sack above and the remaining open side thereof was sealed. Thereby, prepared was the polarizing plate where the polarizing film was wrapped with the protector sack and where stretch-orientations of both the polarizing film and protector were set in the same direction. The polarizing plate thus obtained was stored at 70°C — 90% RH in a constant temperature-humidity conditioner for 60 hrs. Table 1 shows data of the initial and the post-test measurements at the wave length 410 nm.

Comparative Example 1

The polarizing film based on PVA-iodine treatment was prepared under the same condition as in Reference Example 1. On the other hand, the same sack as hereinbefore was prepared by using a commercial PMMA film, made by Nippon Carbide Industries Co., Ltd., HIS® —A film, in the same way as in Reference Example 1. This PMMA film had the thickness of 50 μm and the water vapor transmission of 140 $g/m^2 \cdot day \cdot 100$ μm and the light transmission of 87%. The above said PVA-iodine treatment polarizing film containing moisture of 9% was put into the PMMA film sack and then the remaining open side was sealed. Thereby prepared was the polarizing plate completely wrapped by the protector film of PMMA. The polarizing plate thus obtained was stored at 40°C — 90% RH in the same conditioner as hereinbefore for 96 hrs. Thereafter the post-test polarizability was measured, by which the decrease extent from the initial was determined. Results are shown in Table 1.

Comparative Example 2

A commercial polarizing plate, by Sanritsu Electric Co., Ltd., Barilite® $LLC_2$—12—18, itself as it was, was subjected to the test where the plate was stored at 40°C — 90% RH in the same conditioner as hereinbefore for 96 hrs. Thereafter the post-test polarizability thereof was measured. Results are shown in Table 1.

Comparative Example 3

A commercial polarizing plate, by Nitto Denki Kogyo Co., Ltd., NPF—1100H, was subjected as it was, except that adhesive on one-side surface was removed, to the test where the plate was stored at 70°C — 90% RH in the same conditioner for 60 hrs. Thereafter the post-test polarizability was measured. Results are shown in Table 1.

Comparative Example 4

A colored polarizing film based on PVA-dichroism dye was prepared under the same condition as in Reference Example 5. On the other hand, the same sack hereinbefore was prepared with the same PMMA film as used in Comparative Example 1. Said colored polarizing film containing moisture 5% was put into the PMMA film sack and the remaining open one side was sealed. Thereby, prepared was the polarizing plate completely wrapped by the protector film of PMMA. The polarizing plate thus obtained was stored at 70°C — 90% RH in the same conditioner for 60 hrs. The initial and post-test polarizabilities at the wave length 410 nm are shown in Table 1.

Table 1

| | Initial Performance | | Post-Humid Test Performance | |
|---|---|---|---|---|
| | Transmission of Single Polarizer (%) | Polarizing Co-Efficient(%) | Transmission of Single Polarizer (%) | Polarizing Co-Efficient (%) |
| Reference Example 1 | 36 | 95 | 36 | 95 |
| 2 | 37 | 96 | 36 | 95 |
| 3 | 33 | 91 | 47 | 92 |
| 4 | 45 | 93 | 49 | 85 |
| 5 | 47 | 58 | 46 | 60 |
| Comparative Example 1 | 37 | 97 | above 70 | below 30 |
| 2 | 33 | 91 | 53 | 83 |
| 3 | 45 | 93 | 62 | 52 |
| 4 | 47 | 58 | above 70 | below 30 |

Enhancement of Humid and Thermal Durabilities

Reference Examples 1—5 provide test results on the polarizing plates in which protective films as defined in this invention are employed while Comparative Examples 1—4 provide results on conventional polarizing plates. An improvement under humid atmosphere is shown for Reference Examples 1 to 5 but polarizing plates having such improved humid durability are not always satisfactory in terms of thermal durability and potential applications are limited.

The enhancement of humid and thermal durabilities has been studied and improved to a satisfactory level in accordance with the invention by using a polarizing film having a moisture content of not more than 5%, desirably not more than 2%.

When a protective film is provided on both surfaces of a polarizing film in accordance with the invention, not only the polarizing film but also the protective layers to be provided, in the manner of coating or laminating, on the surface of the polarizing film are required to undergo the moisture control to improve humid and thermal characteristics, and weathering characteristics. The moisture content of a polarizing film may be controlled by drying during the production process to a finished plate.

Example 1

A polarizing film made of PVA and iodine-treatment was prepared under the same condition as in Reference Example 1, and the film was dried in a constant temperature box, at 100°C for 1 hr, to have the decreased moisture content of 1%. On the other hand, a three side sealed sack like a letter envelope was prepared with HDPE film of 100 μm which had been stretched 7 times under the same condition as Reference Example 1. The moisture content of this HDPE film was less than 0.1%. Then said polarizing film having a moisture content 1% was put into said HDPE sack like a letter envelope and thereafter the remaining open side was sealed. Thus prepared was the polarizing plate wrapped completely with a protector film. This polarizing plate was stored at 70°C — 90% RH in a constant temperature-humidity conditioner for 96 hrs, thereby the humid durability was tested. One group of polarizing plates out of two was subjected to a thermal resistance test by storing in a constant temperature box for 13 hrs. The other group was stored in a sunshine weather meter for 200 hrs, thereby the weather resistance was tested. Results are shown in Table 2.

Example 2

A commercial polarizing plate made by Sanritsu Electric Co., Ltd. with the brandname Barilite® LLC$_2$—12—18 was dried in the same box as hereinbefore at 100°C for 1 hr. The weight loss across the drying was 4.0%. It contains moisture of about 1%. On the other hand, a HDPE film of 100 μm which had been stretched 7 times under the same condition as Reference Example 1 was folded and sealed at three sides to be a sack like a letter envelope. Above said commercial polarizing plate was put into the HDPE sack and then the remaining open side was sealed. It should be noted that putting into and sealing above were conducted quickly just after the polarizing plate was taken out of the box above. The polarizing plate thus obtained was stored at 70°C — 90% RH in the same conditioner as hereinbefore for 96 hrs. Another polarizing plate obtained in the same way was stored in the same box as hereinbefore at 100°C for 13 hrs.

After these tests were finished, the commercial plate was taken out of the protector HDPE sack and was measured of its performances. Results are shown in Table 2.

## Example 3

The commercial polarizing plate, made by Nitto Denki Kogyo Co., Ltd. with the brandname NPF—1100H, which was used in tests after adhesive on one-side thereof was removed. In the first place, the polarizing plate was dried in the same box at 100°C for 1 hr. The weight loss across the drying was 2.5%. It contains moisture of about 1%. On the other hand, a HDPE film of 100 µm which had been stretched 7 times under the same condition as in Reference Example 1 was folded and sealed at three sides to be a sack like a letter envelope. Above said commercial polarizing plate was put into the HDPE sack and then the remaining open side was sealed. These putting into and sealing above said were conducted quickly just after the polarising plate was taken out of the box. The polarizing plate thus obtained was stored under 70°C — 90% RH in the same conditioner for 96 hrs. Another polarizing plate obtained in the same way was stored in the same box at 100°C for 13 hrs. After these tests were finished, the commercial plate was taken out of the protector HDPE sack and was measured of its performance. Results are shown in Table 2.

## Example 4

A PVA polarizing base film was prepared under the same condition as in Reference Example 1. This PVA film was stretched 4 times and dipped with being kept in tension at 15°C for 40 seconds into the same aqueous solution composed of iodine and potassium iodide as in Reference Example 1, and again dipped at 50°C for 90 seconds into the boric acid aqueous solution with the same composition as in Reference Example 1, and further was washed much with alcohol at 15°C, thereby the polarizing film was obtained. This film had a moisture content of 11%. Films prepared in the same way above were dried and films having moisture content at 8%, 5% and 1% were made ready.

On the other hand, HDPE film of 80 µm which had been stretched 6 times by rolling under the same condition as in Reference Example 1 was folded and sealed to the same sack as hereinbefore. Into HDPE sacks above, iodine-treated PVA polarizing films having the moisture content 11%, 8%, 5% and 1% were each put and sealed respectively in the same way. Polarizing plates thus obtained were stored in the same box at 100°C for 15 hrs. Thereafter the sealed polarizing films were taken out of HDPE sacks and were measured of their performances. In Table 3, data are shown with initial performances at the time of being dyed. On the other hand, another group of the sealed plates prepared in the same way was stored at 70°C — 90% RH in the same conditioner, thereby the humid durability was tested. Results are shown in Table 3.

## Comparative Example 5

The experiment was conducted with the same procedures as in Example 1, where only difference therefrom lay in that the iodine-treated PVA polarizing film was put and sealed into the HDPE sack as the polarizing film had moisture content of 10%. Results are shown in Table 2.

## Comparative Example 6

The experiment was conducted with the same procedures as in Example 2 where only difference therefrom lay in that the commercial polarizing plate was, in the state of undried as stored in dark area for long-term stock, sealed in the HDPE sack. Results are shown in Table 2.

## Comparative Example 7

The experiment was conducted with the same procedures as in Example 3 where only difference lay in that the commercial polarizing film was sealed undried into the HDPE sack. Results are shown in Table 2.

## Comparative Example 8

A polarizing film was prepared in the same way as in Example 4 and both surfaces thereof were laminated with commercial cellulose triacetate film of 80 µm by Fuji Film Co., Ltd. as protector so that polarizing plates having different moisture contents may be available. Then these polarizing plates were tested of humid durability under the same condition as Example 4. Table 3 shows the initial and the post-humid test performance.

Table 2

| | Thermal Durability Test | | | | Humid Durability Test | | | | Weather Durability Test | | | |
|---|---|---|---|---|---|---|---|---|---|---|---|---|
| | Initial Performance (%) | | Post-test Performance (%) | | Initial Performance (%) | | Post-test Performance (%) | | Initial Performance (%) | | Post – test Performance (%) | |
| | A* | B* | A* | B* | A* | B* | A* | B* | A* | B* | A* | B* |
| Example 1 | 37 | 95 | 38 | 93 | 37 | 95 | 37 | 95 | 37 | 95 | 42 | 91 |
| Example 2 | 31 | 93 | 32 | 91 | 31 | 93 | 31 | 90 | – | – | – | – |
| Example 3 | 45 | 93 | 46 | 92 | 45 | 93 | 46 | 92 | – | – | – | – |
| Comparative Example 5 | 37 | 95 | above 70 | below 30 | 37 | 95 | above 70 | below 30 | 37 | 95 | above 70 | below 30 |
| Comparative Example 6 | 33 | 95 | above 70 | below 30 | 33 | 95 | 60 | 38 | – | – | – | - |
| Comparative Example 7 | 45 | 93 | above 70 | below 30 | 45 | 93 | 50 | 68 | – | – | – | – |

Note  A*:  Transmission of Single Polarizer

B*:  Polarizing Co-Efficient

Table 3

| | | Example 4 | | | | Comparative Example 8 | |
|---|---|---|---|---|---|---|---|
| | | Thermal Durability Test | | Humid Durability Test | | Humid Durability Test | |
| | | A*(%) | B*(%) | A*(%) | B*(%) | A*(%) | B*(%) |
| Initial Reference | | 51 | 92 | 48 | 95 | 49 | 95 |
| Moisture Content | 11% sample | 62 | 47 | 61 | 79 | above 70 | below 30 |
| | 8% sample | 55 | 84 | 56 | 85 | above 70 | below 30 |
| | 5% sample | 54 | 85 | 50 | 93 | above 70 | below 30 |
| | 1% sample | 52 | 90 | 49 | 95 | above 70 | below 30 |

Note  A*:  Transmission of Single Polarizer

B*:  Polarizing Co-Efficient

### Example 5

An iodine-treated PVA polarizing film was prepared under the same condition as in Reference Example 1 and this polarizing film was dried in the constant temperature box to have the decreased moisture content of 1%.

A HDPE film of 100 μm which had been stretched 7 times under the same condition as in Reference Example 1 was corona treated on one side surface thereof and was laminated on both surfaces of the polarizing film by use of urethane adhesive, where stretch-orientations of the polarizing film and HDPE film were set in the same direction. The polarizing plate thus obtained was stored at 70°C — 90% RH in the same box hereinbefore for 240 hrs, thereby the humid durability was tested. Another two groups of polarizing plates were applied; one was tested on the thermal durability in the same box at 100°C for 13 hrs and another was tested on the weather durability in the sunshine weather meter for 200 hrs. Results are shown in Table 4.

### Example 6

An iodine-treated PVA polarizing film was prepared under the same condition as in Reference Example 1 and this film was dried in the same box to have the moisture content of 1%. On the other hand, polypropylene film of 100 μm, by Sumitomo Chemical Co., Ltd. with brandname Sumitomo Noblen® FS2011, which had been stretched 6 times at 90°C longitudinally and uniaxially by rolls with water as lubricant, was corona treated, and thereafter was laminated on both surfaces of the polarizing film by use of urethane adhesive, where stretch-orientations of the polarizing film and polypropylene film were set in the same direction. This rolled polypropylene film had the waver vapor transmission of 2.4 g/m² · day · 100 μm and the average light transmission in the visible region of 88%. The polarizing plate thus obtained was stored under 70°C — 90% RH in the same conditioner for 240 hrs, thereby the humid durability was tested. Another group of the polarizing plates was tested on the thermal durability by storing at 100°C for 13 hrs in the same box and one more group thereof was tested on the weather durability for 200 hrs in the sunshine weather meter for 200 hrs. Results are shown in Table 4.

Table 4

| | Thermal Durability Test | | | | Humid Durability Test | | | | Weather Durability Test | | | |
|---|---|---|---|---|---|---|---|---|---|---|---|---|
| | Initial Performance (%) | | Post—test Performance (%) | | Initial Performance (%) | | Post-test Performance (%) | | Initial Performance (%) | | Post–test Performance (%) | |
| | A* | B* | A* | B* | A* | B* | A* | B* | A* | B* | A* | B* |
| Example 5 | 38 | 96 | 40 | 94 | 38 | 96 | 38 | 96 | 38 | 96 | 41 | 93 |
| Example 6 | 39 | 96 | 41 | 95 | 39 | 96 | 39 | 96 | 39 | 96 | 42 | 93 |

Note  A*:  Transmission of Single Polarizer

B*:  Polarizing Co-Efficient

**Claims**

1. A light-polarizing plate comprising a light-polarizing film covered with a protective film of polymer, wherein said light polarizing film immediately after manufacture has a moisture content of not more than 5% and said protective film has an average light transmission in the visible region of not less than 30% and a water vapor transmission of not more than 10 g/m².day.

2. A light-polarizing plate according to claim 1, wherein the protective film is made of high density polyethylene or polypropylene and has been uniaxially stretched by means of pressure rolls.

3. A light-polarizing plate according to claim 1 or 2, wherein the polarizing film is covered with the protective film by coating, laminating or enclosing in a sealed envelope.

4. A light-polarizing plate according to claim 1, 2 or 3, wherein the polarizing film is made of polyvinylalcohol or a derivative thereof stretched uniaxially by pressure rolls.

5. A process for the manufacture of a light-polarizing plate as claimed in any one of claims 1 to 4 which comprises conditioning a hydrophilic light-polarizing film to a moisture content of not more than 5% and then covering said conditioned light-polarizing film with the protective film.

**Patentansprüche**

1. Polarisationsplatte, umfassend einen das Licht polarisierenden Film, der durch einen Schutzfilm aus einem Polymeren abgedeckt ist, wobei der besagte, das Licht polarisierende Film unmittelbar nach seiner Herstellung einen Feuchtigkeitsgehalt von nicht mehr als 5% hat und besagter Schutzfilm eine mittlere Lichtdurchlässigkeit im sichtbaren Bereich von nicht weniger als 30% und eine Wasserdampfdurchlässigkeit von nicht mehr als 10 g/m² je Tag aufweist.

2. Polarisationsplatte nach Anspruch 1, bei welcher der Schutzfilm aus einem Polyäthylen oder Polypropylen hoher Dichte hergestellt ist und mittels Druckwalzen in nur einer Richtung gereckt worden ist.

3. Polarisationsplatte nach Anspruch 1 oder 2, bei welcher der das Licht polarisierende Film durch Überziehen, Laminieren oder Einschließen in eine versiegelte Hülle mit dem Schutzfilm abgedeckt ist.

4. Polarisationsplatte nach Anspruch 1, 2 oder 3, bei welcher der das Licht polarisierende Film aus Polyvinylalkohol oder einem Derivat desselben hergestellt ist und mittels Druckwalzen in nur einer Richtung gereckt worden ist.

5. Ein Verfahren zur Herstellung einer Polarisationsplatte nach irgendeinem der Ansprüche 1 bis 4, umfassend das Konditionieren eines hydrophilen, das Licht polarisierenden Films bis zu einem Feuchtigkeitsgehalt von nicht mehr als 5% und das anschließende Abdecken besagten konditionierten, das Licht polarisierenden Films mit dem Schutzfilm.

**Revendications**

1. Plaque de polarisation de la lumière comprenant une pellicule de polarisation de la lumière recouverte d'une pellicule protectrice de polymère, la pellicule de polarisation de la lumière ayant immédiatement après fabrication une teneur en humidité qui n'est pas supérieure à 5%, et la pellicule protectrice ayant une transmission moyenne de la lumière dans le domaine visible qui n'est pas inférieure à 30% et une transmission de la vapeur d'eau qui n'est pas supérieure à 10 g/m² jour.

2. Plaque de polarisation de la lumière suivant la revendication 1, dans laquelle la pellicule protectrice est en polyéthylène haute densité ou en polypropylène et a été étirée uniaxialement au moyen de rouleaux d'application d'une pression.

3. Plaque de polarisation de la lumière suivant la revendication 1 ou 2, dans laquelle la pellicule polarisante est recouverte de la pellicule protectrice par application d'un revêtement, par placage ou en étant enfermée dans une enveloppe scellée.

4. Plaque de polarisation de la lumière suivant la revendication 1, 2 ou 3, dans laquelle la pellicule polarisante est en alcool polyvinylique ou en l'un de ses dérivés étiré uniaxialement par des rouleaux d'application d'une pression.

5. Procédé de fabrication d'une plaque de polarisation de la lumière, tel que revendiqué à l'une quelconque des revendications 1 à 4, qui consiste à conditionner une pellicule de polarisation de la lumière hydrophile jusqu'à ce qu'elle ait une teneur en humidité qui n'est pas supérieure à 5%, puis à recouvrir cette pellicule conditionnée de polarisation de la lumière de la pellicule protectrice.